# EUROPÄISCHE PATENTSCHRIFT

(11) **EP 1 592 577 B1**
(45) Veröffentlichungstag und Bekanntmachung des Hinweises auf die Patenterteilung: **03.12.2008**
(21) Anmeldenummer: 04707528.8
(22) Anmeldetag: 03.02.2004
(51) Int. Cl.: B60N 2/225, B60N 2/18, F16B 5/04, F16B 17/00, B21D 39/03

(54) **GETRIEBEBESCHLAG FÜR EINEN FAHRZEUGSITZ**
GEARED FITTING FOR A VEHICLE SEAT
MECANISME A ENGRENAGE POUR SIEGE DE VEHICULE

(30) Priorität: 11.02.2003 DE 10305407
(43) Veröffentlichungstag der Anmeldung: 09.11.2005
(73) Patentinhaber: KEIPER GmbH & Co. KG, 67657 Kaiserslautern (DE)
(72) Erfinder: DILL, Thomas, 67699 Heiligenmoschel (DE); KUSCU, Erdal, 76829 Landau (DE)
(74) Vertreter: Patentanwälte Hosenthien-Held und Dr. Held
(86) Internationale Anmeldenummer: PCT/EP2004/000948
(87) Internationale Veröffentlichungsnummer: WO 2004/071803

(56) Entgegenhaltungen:
- EP-A- 0 556 712
- DE-A- 4 030 591
- DE-C- 4 340 696
- DE-C- 10 120 854
- FR-A- 1 598 813
- FR-A- 2 371 252
- FR-A- 2 752 886
- GB-A- 1 511 360
- US-A- 5 104 190
- US-A- 5 573 345

## Beschreibung

Die Erfindung betrifft einen Getriebebeschlag für einen Fahrzeugsitz, insbesondere für einen Kraftfahrzeugsitz, mit den Merkmalen des Oberbegriffs des Anspruches 1.

Bei einem aus der US 5,536,217 A bekannten Getriebebeschlag mit zwei Hohlrädern und einem Ritzel wird das Ritzel durch einen mehrteiligen Exzenter angetrieben, welcher im Inneren des Getriebebeschlags angeordnet ist und durch die Hohlräder axial gesichert ist. Eine axiale Sicherung der Hohlräder erfolgt durch einen Ring, welcher die beiden runden Hohlräder an ihrem Außenumfang zusammenklammert. Zur Befestigung des Getriebebeschlags an der Sitzstruktur sind an den Hohlrädern Vorsprünge ausgebildet.

Die DE 101 20 854 C1 zeigt einen gattungsgemäßen Getriebebeschlag der eingangs genannten Art, dessen axiale Sicherung durch insgesamt zwei Halteklammern erfolgt, welche je einem Hohlrad zugeordnet sind und das jeweils andere Hohlrad übergreifen, wobei eine Halteklammer auch der Lagerung des Exzenters dient.

Der Erfindung liegt die Aufgabe zu Grunde, einen Getriebebeschlag der eingangs genannten Art zu verbessern. Diese Aufgabe wird erfindungsgemäß durch einen Getriebebeschlag mit den Merkmalen des Anspruches 1 gelöst. Vorteilhafte Ausgestaltungen sind Gegenstand der Unteransprüche.

Dadurch, daß der Exzenter einen Teil einer axialen Verklammerung der Hohlräder, insbesondere zur Aufnahme starker axialer Kräfte, bildet, welche die in der Regel vorhandenen Halteklammern ergänzt, können die im Crashfall auftretenden Kräfte besser aufgenommen werden, so daß der Getriebebeschlag auch für Anwendungsfälle mit höheren Belastungen einsetzbar ist. Dies gilt auch im Vergleich zu vereinfacht aufgebauten, bevorzugt als Lehneneinsteller eingesetzten Getriebebeschlägen, bei denen das Ritzel und ein Hohlrad durch ein einstückig ausgebildetes Beschlagteil ersetzt sind, so daß sich grundlegend andere Kraftverhältnisse ergeben.

Die axiale Verklammerung wird dadurch erreicht, daß auf einer Seite des Getriebebeschlags ein Ring auf den von der anderen Seite her eingesteckten, einstückig ausgebildeten Exzenter fest aufgebracht ist, vorzugsweise sowohl formschlüssig als auch kraftschlüssig aufgrund einer radialen Vorspannung. Der Ring liegt dann an der das zweite Hohlrad übergreifenden Halteklammer an, während auf der anderen Seite des Getriebebeschlags der Exzenter selber mittels eines angeformten Flansches am ersten Hohlrad oder der anderen Halteklammer anliegt. Die Einbeziehung der Halteklammer in die Lagerstelle hat den Vorteil, daß die großen Kräfte, die aufgrund des sehr hohen axialen Zusammenhalts aufgenommen werden können, auch gut abgeleitet werden können.

Vorzugsweise ist zwischen dem Exzenter und dem Ring zusätzlich eine Verdrehsicherung in Umfangsrichtung vorgesehen, welche eine Geräuschbildung verhindert. Der Exzenter ist im Fall der Lösung mit dem Ring auch nach der Montage des Getriebebeschlags ausbaubar und austauschbar, indem der Ring wieder entfernt wird. Nacharbeiten zur Spielreduzierung und Qualitätsverbesserung sind somit möglich. Hierfür ist es von Vorteil, wenn der Exzenter axial abgestuft aufgebaut ist, d.h. seine in axialer Richtung nebeneinander angeordneten Abschnitte einen im kleiner werdenden (oder in anderer Blickrichtung immer größer) werdenden Durchmesser aufweisen. Um eine ausreichende Menge an Fett während des Betriebs zur Verfügung zu haben, welche geräusch- und verschleißreduzierend wirkt, weist der Exzenter an seiner Umfangsfläche wenigstens eine Fett-Tasche auf.

Ein Federring im Getriebebeschlag kann den Exzenter in axialer Richtung vorspannen, beispielsweise durch Anordnung in axialer Richtung zwischen dem Ring und dem anderen Ende des Exzenters, was ablaufhemmend wirkt. Zugleich wird ein Spiel auch in radialer Richtung reduziert. Außerdem wirkt der Federring vorzugsweise als Dichtung, die einen Eintritt von Lack beim Lackieren und einen Austritt von Fett während des Gebrauchs verhindert.

Ein zum Antrieb des Exzenters vorgesehenes Handrad weist vorzugsweise eine geformte Übertragungsstange auf, welche durch Formschluß drehfest mit dem Exzenter zusammenwirkt. Durch diese einstückige Ausbildung verringert sich die Anzahl der Bauteile und damit der Montageaufwand. Zudem verringern sich die Herstellungskosten. Vorzugsweise ist eine zusätzliche Verdrehsicherung zwischen dem Handrad und dem Exzenter vorgesehen, die zugleich auch die Übertragung größerer Drehmomente erlaubt. Es ist aber auch möglich, den Exzenter über eine lange Übertragungsstange von der anderen Seite des Fahrzeugsitzes aus anzutreiben.

Bei den zum wechselseitigen axialen Zusammenhalt der beiden Hohlräder vorgesehenen Halteklammern ist es von Vorteil, wenn bei wenigstens einer Halteklammer bei der Montage Kragenzüge ausgebildet werden, die zugleich in das ihr zugeordnete Hohlrad eingepresst werden. Hohlrad und Halteklammer sind dann fest miteinander verbunden, d.h. insbesondere unbeweglich zueinander. Aufgrund des Einpressens erfolgt die Montage der Halteklammer verzugsfrei, wobei anschließend durch die Kragenzüge hindurch die Befestigung des Getriebebeschlags erfolgen kann, indem Befestigungsmittel durch die Kragenzüge gesteckt werden oder im Bereich der Kragenzüge eine Schweißverbindung hergestellt wird, wobei durch die bereits vorhandene feste Verbindung kein Verzug mehr erfolgt. Eine zusätzliche Lagerung des Exzenters, welcher ansonsten in einem der Hohlräder gelagert ist, durch eine Halteklammer hat den Vorteil, daß das System ablaufsicherer wird, d.h. kleine Winkeländerungen durch ein abtriebsseitiges Moment weitgehend vermieden werden.

Der erfindungsgemäße Getriebebeschlag ist beispielsweise als Neigungseinsteller für ein Sitzkissen eines Fahrzeugsitzes einsetzbar, wo er mit einem einfachen Gelenk zusammen eine Schwenkbewegung definiert. Es ist aber auch denkbar, den erfindungsgemäßen Getriebebeschlag für andere Einstellungen, beispielsweise der Lehne, zu verwenden, wobei dann zwei Getriebebeschläge über eine gemeinsame Übertragungsstange angetrieben werden.

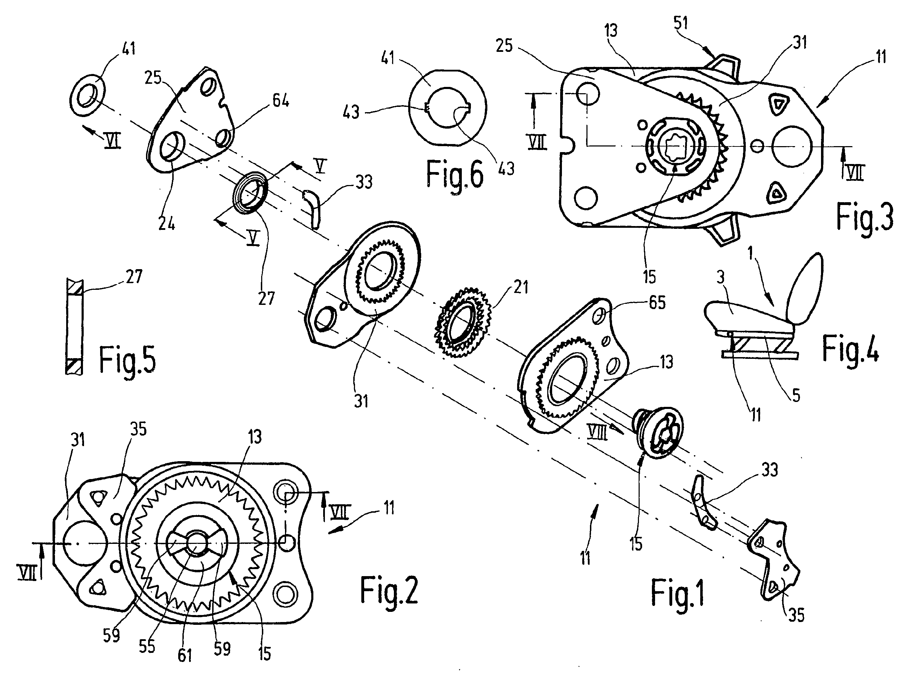

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels,
- Fig. 2: eine Seitenansicht des Ausführungsbeispiels,
- Fig. 3: die Seitenansicht aus der bezüglich Fig. 2 gegenüberliegenden Blickrichtung mit im wesentlichen verdecktem Handrad,
- Fig. 4: eine schematisierte Darstellung eines Fahrzeugsitzes,
- Fig. 5: einen Radialschnitt durch den Federring entlang der Linie V-V in Fig. 1,
- Fig. 6: eine Ansicht der Innenseite des Rings in Richtung des Pfeiles VI in Fig. 1,

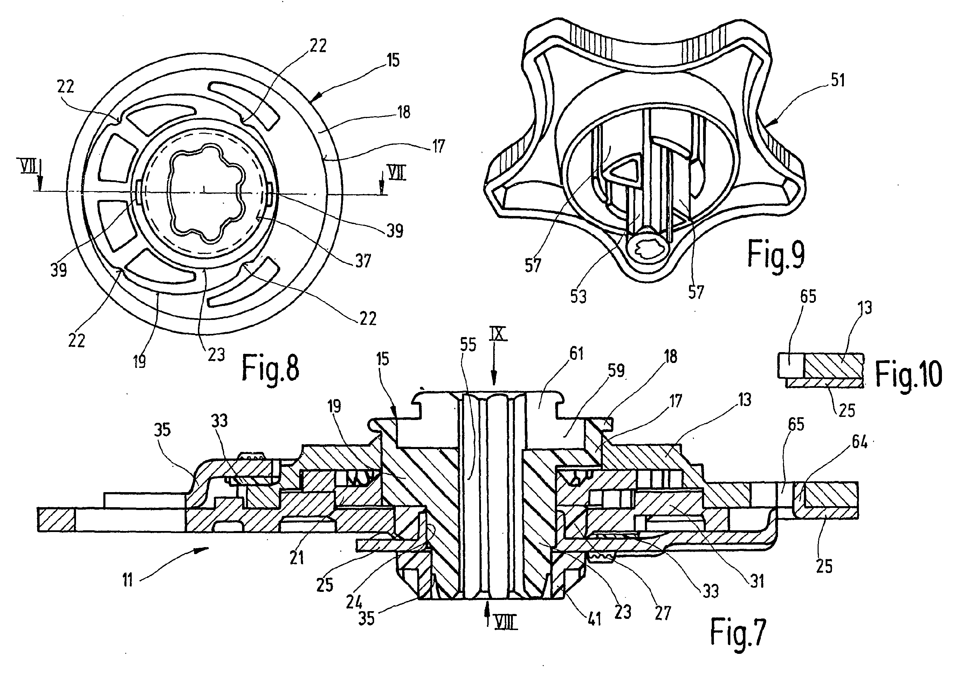

- Fig. 7: einen Längsschnitt durch das Ausführungsbeispiel entlang der Linien VII-VII in den Fig. 2, 3 und 8, ohne Darstellung des Handrades,
- Fig. 8: eine Stirnansicht des Exzenters in Richtung der Pfeile VIII in den Fig. 1 und 7,
- Fig. 9: eine perspektivische Ansicht des Handrades, welches in Richtung des Pfeiles IX in Fig. 7 auf dem Exzenter zu befestigen ist, und
- Fig. 10: einen Schnitt entsprechend dem rechten Teil von Fig. 7 vor Ausbildung der zweiten Kragenzüge.

Bei einem Fahrzeugsitz 1 ist das auf einer Sitzschale angebrachte Sitzkissen 3 in seiner Neigung relativ zum Sitzrahmen 5 einstellbar. Hierfür ist eine als Rohr ausgebildete Quertraverse, welche das Vorderteil des Sitzrahmens 5 bildet, an den vorderen Enden der beiden Seitenteile des Sitzrahmens 5 schwenkbar angelenkt, und zwar auf einer Seite (vorliegend tunnelseitig) mittels eines einfachen Gelenks, in dessen Bereich zugleich auch eine Kompensationsfeder angeordnet ist, und auf der anderen Seite (vorliegend schwellerseitig) mittels eines Getriebebeschlags 11. Durch die Schwenkbewegung der Quertraverse wird die Höhe der Vorderkante des Sitzkissens 3 und damit die Neigung des Sitzkissens 3 geändert.

Der Getriebebeschlag 11 weist ein erstes, gestellseitiges Hohlrad 13 zur Befestigung am Seitenteil des Sitzrahmens 5 auf. In einer zentralen Öffnung des gestellseitigen Hohlrades 13 ist ein Exzenter 15 aus Kunststoff mit einem ersten Lagerabschnitt 17 drehbar gelagert, wobei dessen Drehachse das nachfolgend verwendete Zylinderkoordinatensystem definiert. Am ersten Lagerabschnitt 17 ist ein an der Außenseite des gestellseitigen Hohlrades 13 anliegender Flansch 18 angeformt. An den ersten Lagerabschnitt 17 des einstückig ausgebildeten Exzenters 15 schließt sich in axialer Richtung auf der vom Flansch 18 abgewandten Seite ein exzentrisch zur Drehachse des Exzenters 15 angeordneter zweiter Lagerabschnitt 19 an, auf welchem gleitend ein Ritzel 21 sitzt.

Auf der Umfangsfläche des zweiten Lagerabschnitts 19 sind um je 90° versetzt vier leicht vertiefte Fett-Taschen 22 ausgebildet, welche das zur Verbesserung des Gleitens des Ritzels 21 und zur Geräuschreduzierung vorgesehene Fett aufnehmen.

Das Ritzel 21 kämmt mittels einer ersten Außenverzahnung eine in einem vertieften Bauraum vorgesehene Innenverzahnung des gestellseitigen Hohlrades 13, wobei die Anzahl der Zähne sich um wenigstens eins unterscheidet und der Außendurchmesser des Ritzels 21 (d.h. der Kopfkreisdurchmesser von dessen Verzahnung) um wenigstens eine Zahnhöhe geringer ist als der Innendurchmesser des gestellseitigen Hohlrades 13 (d.h. der Fußkreisdurchmesser von dessen Innenverzahnung).

An den zweiten Lagerabschnitt 19 des Exzenters 15 schließt sich in axialer Richtung auf der vom ersten Lagerabschnitt 17 abgewandten Seite ein konzentrisch zur Drehachse des Exzenters 15 angeordneter dritter Lagerabschnitt 23 an. Ein erster Kragenzug 24 einer an der Außenseite des Getriebebeschlags 11 angeordneten, gestellseitigen Halteklammer 25 lagert drehbar diesen dritten Lagerabschnitt 23. Durch diese weitere gestellseitige Lagerung des Exzenters 15 wird der Getriebebeschlag 11 ablaufsicherer. Die gestellseitige Halteklammer 25 ist auf eine später genauer beschriebene Weise am gestellseitigen Hohlrad 13 befestigt. Ein Federring 27 aus Gummi oder einem anderen elastischen Material ist zwischen der vom dritten Lagerabschnitt 23 radial abgewandten Seite des Kragenzugs der gestellseitigen Halteklammer 25 und einem radial außen im gestellseitigen Hohlrad 13 gelagerten, zweiten, abtriebsseitigen Hohlrad 31 angeordnet. Dabei ist zwischen der gestellseitigen Halteklammer 25 und dem abtriebsseitigen Hohlrad 31 ein an der gestellseitigen Halteklammer 25 befestigter Gleiter 33 aus Kunststoff vorgesehen.

Das Ritzel 21 kämmt mit einer gegenüber der ersten Außenverzahnung axial versetzten zweiten Außenverzahnung eine in einem vertieften Bauraum vorgesehene Innenverzahnung des abtriebsseitigen Hohlrades 31, wobei die Anzahl des Zähne sich um wenigstens eins unterscheidet. Die Unterschiede der Durchmesser entsprechen denjenigen im Verhältnis zum gestellseitigen Hohlrad 13, jedoch sind die Durchmesser absolut geringer, so daß das Ritzel 21 eine Übersetzung der Drehbewegung vornimmt. Die beiden Hohlräder 13 und 31 umschließen das Ritzel 21 vollständig und liegen in dem radial außerhalb davon angeordneten Bereich flächig aneinander an. An einer am abtriebsseitigen Hohlrad 31 angeschweißten, abtriebsseitigen Halteklammer 35 ist ein weiterer Gleiter 33 aus Kunststoff befestigt, welcher an der vom abtriebsseitigen Hohlrad 31 abgewandten Seite des gestellseitigen Hohlrades 13 anliegt.

An dem vom Flansch 18 abgewandten Ende des Exzenters 15 schließt sich in axialer Richtung an den dritten Lagerabschnitt 23 eine Ringaufnahme 37 an. Die Ringaufnahme 37 ist in der Art einer in Umfangsrichtung umlaufenden Ringnut mit zwei diametral gegenüberliegenden Verdrehsicherungsnocken 39 ausgebildet. Auf dieses Ende des Exzenters 15 ist ein Ring 41 aus Kunststoff aufgeclipst, welcher auf seiner Innenseite formschlüssig in die Ringaufnahme 37 greift. Der Ring 41 weist zwei Verdrehsicherungsaufnahmen 43 auf, welche formschlüssig mit den Verdrehsicherungsnocken 39 zusammenwirken.

Der Exzenter 15 mit dem aufgeclipsten Ring 41 bildet eine axiale Verklammerung, welche die im Crashfall neben den Kräften in Umfangsrichtung des Getriebebeschlags auch in Querrichtung des Sitzrahmens 5, also in axialer Richtung des Getriebebeschlags 11, auftretenden, starken Kräfte sicher aufnehmen kann, beispielsweise bis zu einigen kN. Der gegenüber der Ringaufnahme 37 geringfügig kleinere Ring 41 wird daher mittels eines Werkzeugs aufgeclipst, so daß er nicht nur formschlüssig, sondern auch unter radialer Vorspannung - und aufgrund des Federrings 27 auch unter axialer Vorspannung - auf dem Exzenter 15 sitzt.

Die durch die Verdrehsicherungsnocken 39 und die Verdrehsicherungsaufnahmen 43 gebildete Verdrehsicherung in Umfangsrichtung des Getriebebeschlags 11 verhindert eine Geräuschbildung aufgrund einer Relativdrehung von Exzenter 15 und Ring 41.

Der Ring 41 kann auch nach dem Aufclipsen mittels eines Werkzeugs, beispielsweise eines Schraubendrehers, wieder entfernt werden, so daß der Exzenter 15 auch nachträglich ausgetauscht werden kann, beispielsweise für Nacharbeiten oder um durch Auswahlpassung das Spiel im Getriebebeschlag 11 zu reduzieren.

Nach der Montage des Ringes 41 füllt der verformte Federring 27 den gesamten Raum zwischen der gestellseitigen Halteklammer 25, dem abtriebsseitigen Hohlrad 31, dem Ritzel 21 und dem Exzenter 15 aus. Der Federring 27 bringt eine axiale Vorspannung auf den Exzenter 15 auf und verhindert so ein Ablaufen des Getriebebeschlags 11. Zudem verhindert er einen Austritt des für die Bewegung des Ritzels 21 vorgesehenen Fettes und einen Eintritt von Lack beim Lackieren.

Zum Antrieb des Getriebebeschlags 11, d.h. des Exzenters 15, ist ein Handrad 51 vorgesehen, an welchem bereits eine durch Längsrippen profilierte Übertragungsstange 53 angeformt ist. Das Handrad 51 wird an dem vom Ring 41 abgewandten Ende des Exzenters 15 montiert. Die Übertragungsstange 53 greift dabei formschlüssig in eine ebenfalls profilierte, den Exzenter 15 zentral in axialer Richtung durchsetzende Stangenaufnahme 55. Zur eindeutigen Montage weisen die Profile der Übertragungsstange 53 und der Stangenaufnahme 55 an einer Stelle in Umfangsrichtung eine Unregelmäßigkeit in Form einer fehlenden Längsrippe bzw. einer fehlenden Aufnahme für eine Längsrippe auf.

Zur Verbesserung der Momentenübertragung und als zusätzliche Verdrehsicherung zwischen Handrad 51 und Exzenter 15 sind in radialer Richtung an die Übertragungsstange 53 anschließend zwei Flügel 57 an das Handrad 51 angeformt, welche sich in radialer Richtung in der Art eines Schmetterlings von der Übertragungsstange 53 aus vergrößern und in axialer Richtung parallel zur Übertragungsstange 53 verlaufen. Die Flügel 57 greifen nach der Montage des Handrades 51 formschlüssig in entsprechende Flügelaufnahmen 59 des Exzenters 15. Zur axialen Sicherung des Handrades 51 wird dieses an einem Vorsprung 61 des Exzenters 15 im Hinterschnitt verclipst.

Zur Befestigung der gestellseitigen Halteklammer 25 am gestellseitigen Hohlrad 13 werden an der gestellseitigen Halteklammer 25 radial beabstandet zum ersten Kragenzug 24 zwei weitere Kragenzüge bei der Montage ausgebildet, welche vorliegend als zweite Kragenzüge 64 bezeichnet sind. Die beiden zweiten Kragenzüge 64 werden während ihrer Ausbildung in Montageöffnungen 65 des gestellseitigen Hohlrades 13 eingepresst (Preßpasssung). Dieser Fügeprozeß ist - im Gegensatz beispielsweise zum Schweißen - verzugsfrei, was bei diesem letzten Schritt zur Fixierung der Bauteile des Getriebebeschlags 11 von Vorteil ist. Der fertige Getriebebeschlag 11 wird am Seitenteil des Sitzrahmens 5 angeschraubt, angenietet oder anderweitig befestigt, wobei die entsprechenden Befestigungsmittel durch die zweiten Kragenzüge 64 hindurch gesteckt werden.

### Bezugszeichenliste

- 1: Fahrzeugsitz
- 3: Sitzkissen
- 5: Sitzrahmen
- 11: Getriebebeschlag
- 13: gestellseitiges Hohlrad, erstes Hohlrad
- 15: Exzenter
- 17: erster Lagerabschnitt
- 18: Flansch
- 19: zweiter Lagerabschnitt
- 21: Ritzel
- 22: Fett-Tasche
- 23: dritter Lagerabschnitt
- 24: erster Kragenzug
- 25: gestellseitige Halteklammer
- 27: Federring
- 31: abtriebsseitiges Hohlrad, zweites Hohlrad
- 33: Gleiter
- 35: abtriebsseitige Halteklammer
- 37: Ringaufnahme
- 39: Verdrehsicherungsnocken
- 41: Ring
- 43: Verdrehsicherungsaufnahme
- 51: Handrad
- 53: Übertragungsstange
- 55: Stangenaufnahme
- 57: Flügel
- 59: Flügelaufnahme
- 61: Vorsprung
- 64: zweiter Kragenzug
- 65: Montageöffnung

## Patentansprüche

1. Getriebebeschlag für einen Fahrzeugsitz, insbesondere für einen Kraftfahrzeugsitz, mit einem ersten Hohlrad (13), einem von einem Exzenter (15) angetriebenen, das erste Hohlrad (13) kämmenden Ritzel (21), einem vom Ritzel (21) gekämmten zweiten Hohlrad (31) und einer am ersten Hohlrad (13) befestigten Halteklammer (25), wobei das erste Hohlrad (13) und die Halteklammer (25) den Exzenter (15) lagern, **dadurch gekennzeichnet, daß** der Exzenter (15) mit einem Flansch (18) am ersten Hohlrad (13) anliegt, und daß ein an der Halteklammer (25) anliegender Ring (41) auf den Exzenter (15) fest aufgebracht ist, wobei der Exzenter (15) einen Teil einer axialen Verklammerung (15, 41) bildet.

2. Getriebebeschlag nach Anspruch 1, **dadurch gekennzeichnet, daß** der Ring (41) sowohl formschlüssig als auch kraftschlüssig aufgrund einer radialen Vorspannung auf den Exzenter (15) aufgebracht ist.

3. Getriebebeschlag nach Anspruch 1 oder 2, **dadurch gekennzeichnet, daß** zwischen dem Exzenter (15) und dem Ring (41) eine Verdrehsicherung (39, 43) in Umfangsrichtung vorgesehen ist.

4. Getriebebeschlag nach Anspruch 2 oder 3, **dadurch gekennzeichnet, daß** der Exzenter (15) nach Montage des Getriebebeschlags (11) durch Entfernen des Rings (41) austauschbar ist.

5. Getriebebeschlag nach einem der Ansprüche 1 bis 4, **dadurch gekennzeichnet, daß** ein Federring (27) vorgesehen ist, welcher den Exzenter (15) in axialer Richtung vorspannt.

6. Getriebebeschlag nach einem der Ansprüche 1 bis 5, **dadurch gekennzeichnet, daß** der Exzenter (15) an seiner Umfangsfläche wenigstens eine Fett-Tasche (22) aufweist.

7. Getriebebeschlag nach einem der Ansprüche 1 bis 6, **dadurch gekennzeichnet, daß** zum Antrieb des Exzenters (15) ein Handrad (51) vorgesehen ist, an welchem eine durch Formschluß drehfest mit dem Exzenter (15) zusammenwirkende Übertragungsstange (53) angeformt ist.

8. Getriebebeschlag nach Anspruch 7, **dadurch gekennzeichnet, daß** zwischen dem Handrad (51) und dem Exzenter (15) eine zusätzliche Verdrehsicherung (57, 59) vorgesehen ist.

9. Getriebebeschlag nach einem der Ansprüche 1 bis 8, **dadurch gekennzeichnet, daß** an den beiden Hohlrädern (13, 31) jeweils eine Halteklammer (25, 35) zum wechselseitigen axialen Zusammenhalt vorgesehen ist, wobei wenigstens eine Halteklammer (25) mittels Ausbildung und Einpressung von Kragenzügen (64) an dem ihr zugeordneten Hohlrad (13) angebracht ist.

10. Fahrzeugsitz mit einem Sitzkissen (3), dessen Neigung durch einen Getriebebeschlag nach einem der Ansprüche 1 bis 9 einstellbar ist.

## Claims

1. Geared fitting for a vehicle seat, in particular for a motor vehicle seat, with a first internal gear (13), a pinion (21), which is driven by an eccentric (15) and meshes with the first internal gear (13), a second internal gear (31), with which the pinion (21) meshes, and a retaining clamp (25) fastened to the first internal gear (13), wherein the first internal gear (13) and the retaining clamp (25) support the eccentric (15), **characterised in that** the eccentric (15) lies with a flange (18) against the first internal gear (13), and that a ring (41) lying against the retaining clamp (25) is firmly attached to the eccentric (15), wherein the eccentric (15) forms a part of an axial clamping system (15, 41).

2. Geared fitting according to Claim 1, **characterised in that** the ring (41) is attached to the eccentric (15) both positively and non-positively on account of a radial prestress.

3. Geared fitting according to Claim 1 or 2, **characterised in that** an anti-rotation means (39, 43) is provided in the circumferential direction between the eccentric (15) and the ring (41).

4. Geared fitting according to Claim 2 or 3, **characterised in that** the eccentric (15) can be exchanged after installing the geared fitting (11) by removing the ring (41).

5. Geared fitting according to any one of Claims 1 to 4, **characterised in that** a spring ring (27) which prestresses the eccentric (15) in the axial direction is provided.

6. Geared fitting according to any one of Claims 1 to 5, **characterised in that** the eccentric (15) has at least one grease pocket (22) at its circumferential surface.

7. Geared fitting according to any one of Claims 1 to 6, **characterised in that** a handwheel (51) is provided for driving the eccentric (15), on which handwheel a transmission rod (53), which interacts with the eccentric (15) by means of a form-fitting connection, is integrally formed.

8. Geared fitting according to Claim 7, **characterised in that** an additional anti-rotation means (57, 59) is provided between the handwheel (51) and the eccentric (15).

9. Geared fitting according to any one of Claims 1 to 8, **characterised in that** a respective retaining clamp (25, 35) is provided on the two internal gears (13, 31) in order to mutually and axially hold them together, wherein at least one retaining clamp (25) is attached to the internal gear (13) associated therewith by means of the formation and pressing-in of collar-type pulls (64).

10. Vehicle seat with a seat cushion (3), the inclination of which seat can be adjusted by means of a geared fitting according to any one of Claims 1 to 9.

## Revendications

1. Armature d'entraînement pour un siège de véhicule, en particulier pour un siège de véhicule automobile, comportant une première roue à denture intérieure (13), un pignon (21) entraîné par un excentrique (15), engrenant avec la roue à denture intérieure (13), une deuxième roue à denture intérieure (31) engrenant avec le pignon (21) et un étrier de retenue (25) fixé sur la première roue à denture intérieure (13), la première roue à denture intérieure (13) et l'étrier de maintien (25) logeant l'excentrique (15), **caractérisée par le fait que** l'excentrique (15) se raccorde à la première roue à denture intérieure (13) par une bride (18), et qu'une bague (41) se raccordant à l'étrier de maintien (25) est appliquée solidement sur l'excentrique (15), l'excentrique (15) formant une partie d'un dispositif de blocage axial (15, 41).

2. Armature d'entraînement selon la revendication 1, **caractérisée par le fait que** la bague (41) est appliquée sur l'excentrique (15) par complémentarité non seulement de forme mais encore de force sur la base d'une prétention radiale.

3. Armature d'entraînement selon l'une des revendications 1 ou 2, **caractérisée par le fait qu'**entre l'excentrique (15) et la bague (41), est disposé un élément anti-rotation (39, 41) dans la direction périphérique.

4. Armature d'entraînement selon l'une des revendications 2 ou 3, **caractérisée par le fait que** l'excentrique (15) après le montage de l'armature d'entraînement (11) est remplaçable par enlèvement de la bague (41).

5. Armature d'entraînement selon l'une des revendications 1 à 4, **caractérisée par le fait qu'**une bague à ressort (27) est prévue, laquelle assure une pré-tension de l'excentrique (15) dans la direction axiale.

6. Armature d'entraînement selon l'une des revendications 1 à 5, **caractérisée par le fait que** l'excentrique (15) présente au moins une poche à graisse (22) sur sa surface périphérique.

7. Armature d'entraînement selon l'une des revendications 1 à 6, **caractérisée par le fait que**, pour l'entraînement de l'excentrique (15), un volant (51) est prévu, sur lequel est formée une barre de transmission (53) coopérant par complémentarité de forme, de façon solidaire en rotation avec l'excentrique (15).

8. Armature d'entraînement selon la revendication 7, **caractérisée par le fait qu'**entre le volant (51) et l'excentrique (15), est prévu un élément anti-rotation supplémentaire (57, 59).

9. Armature d'entraînement selon l'une des revendications 1 à 8, **caractérisée par le fait que**, sur chacune des deux roues à denture intérieure (13, 31), est prévu un étrier de retenue (25, 35) pour une solidarité axiale réciproque, au moins un étrier de retenue (25) étant appliqué par formation et enfoncement de sections de collerette (64) sur la roue à denture intérieure (13) qui lui est associée.

10. Siège de véhicule présentant un coussin de siège (3), dont l'inclinaison est réglable par une armature d'entraînement telle que définie à l'une des revendications 1 à 9.
